# EUROPÄISCHE PATENTSCHRIFT

(11) **EP 2 745 086 B1**
(45) Veröffentlichungstag und Bekanntmachung des Hinweises auf die Patenterteilung: **13.04.2016**
(21) Anmeldenummer: 12740309.5
(22) Anmeldetag: 05.07.2012
(51) Int. Cl.: G01K 3/06, G01K 7/42

(54) **VERFAHREN ZUM BETREIBEN EINER SENSOREINRICHTUNG IN EINEM FAHRZEUG UND FAHRZEUG**
METHOD FOR OPERATING A SENSOR DEVICE IN A VEHICLE, AND VEHICLE
PROCÉDÉ POUR FAIRE FONCTIONNER UN DISPOSITIF DE DÉTECTION DANS UN VÉHICULE ET VÉHICULE

(30) Priorität: 18.08.2011 DE 102011111070
(43) Veröffentlichungstag der Anmeldung: 25.06.2014
(73) Patentinhaber: Audi AG, 85045 Ingolstadt (DE)
(72) Erfinder: KLIMESCH, Michael, 85057 Ingolstadt (DE)
(74) Vertreter: Brandt, Kai
(86) Internationale Anmeldenummer: PCT/EP2012/002876
(87) Internationale Veröffentlichungsnummer: WO 2013/023723

(56) Entgegenhaltungen:
- DE-A1- 4 218 034
- DE-A1- 10 062 655

## Beschreibung

Die Erfindung betrifft ein Verfahren zum Betreiben einer Sensoreinrichtung in einem Fahrzeug, bei welchem Signale zumindest eines zum Erfassen einer Außentemperatur ausgelegten Sensors verarbeitet werden. Zusätzlich werden Daten verarbeitet, welche eine vor dem Fahrzeug liegende Fahrstrecke betreffen. Des Weiteren betrifft die Erfindung ein Fahrzeug mit einer Steuerungseinrichtung und zumindest einem Temperatursensor.

Die DE 10 2005 051 539 A1 beschreibt ein Verfahren, bei welchem ein Navigationssystem eine Information über eine sich in unmittelbarer Entfernung des Kraftfahrzeugs befindende Brücke bereitstellt. Die Brücke repräsentiert im Winter nämlich ein Gefahrenpotenzial, weil sie bei entsprechender Witterung vereist sein kann. Ein Steuergerät ermittelt die Notwendigkeit eines Eingriffs mittels eines Bremssteuergeräts oder eines Fahrdynamiksteuergeräts, wobei zusätzlich die mittels eines Temperatursensors gewonnene Information über die Außentemperatur berücksichtigt wird. Alternativ zu dem Eingriff kann eine Warnung an einen Fahrer des Kraftfahrzeugs ausgegeben werden.

Die Nutzung von Informationen zur Fahrstrecke ist auch aus der DE 103 43 683 A1 bekannt, wobei hier Informationen über Brücken, Tunnel, die Straßenbeschaffenheit, Witterungs- und Sichtverhältnisse, die Außentemperatur und Seitenwindverhältnisse berücksichtigt werden, um zu ermitteln, in welchem Maße der Fahrer eines Fahrzeugs beansprucht ist. Je nach Beanspruchung des Fahrers wird bestimmt, ob und welche Bedieninformationen, Warnmeldungen, Nachrichten oder Unterhaltungsinformationen an den Fahrer ausgegeben werden.

Die DE 100 62 655 A1 beschreibt eine Sicherheitsvorrichtung für Fahrzeuge, insbesondere Nutzfahrzeuge, mit einem an einer Fahrzeugkarosserie befestigten Außenrückspiegel, der ein Spiegelgehäuse mit wenigstens einer darin angeordneten Spiegelscheibe umfasst, wobei im Bereich des Spiegelgehäuses wenigstens ein die Fahrbahnoberflächentemperatur berührungslos messender Sensor angeordnet ist. Der die Fahrbahnoberflächentemperatur berührungslos messende Sensor ist dabei mit einer die momentane Fahrzeugposition erfassenden Recheneinrichtung, insbesondere einer GPS-Einrichtung, einer Speichereinrichtung zum Abspeichern von Straßenabschnitten, die bei bestimmten Temperaturbedingungen für das Fahrverhalten des Fahrzeugs kritisch sind, und einer Anzeige- oder Warneinrichtung kombiniert zur Ausgabe eines optischen und/oder akustischen Warnsignals an den Fahrer, wenn die vom Sensor gemessene Fahrbahnoberflächentemperatur und/oder Umgebungs- oder Lufttemperatur vor Erreichen des kritischen Straßenabschnitts einen bestimmten Wert unter- oder überschreitet.

Aufgabe der vorliegenden Erfindung ist es, ein Verfahren zum Betreiben einer Sensoreinrichtung und ein Fahrzeug der eingangs genannten Gattung zu schaffen, welches eine verbesserte Nutzung von die vor dem Fahrzeug liegende Fahrstrecke betreffenden Daten ermöglicht.

Diese Aufgabe wird durch ein Verfahren mit den Merkmalen des Patentanspruchs 1 und durch ein Fahrzeug mit den Merkmalen des Patentanspruchs 7 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Betreiben einer Sensoreinrichtung wird eine Auswertung der Signale des zum Erfassen einer Außentemperatur ausgelegten Sensors in Abhängigkeit von den die Fahrstrecke betreffenden Daten verändert. Dies ermöglicht es, die Auswertung der Daten an Gegebenheiten der Fahrstrecke anzupassen und so auch abrupte Änderungen der Außentemperatur einem Fahrer des Fahrzeugs zu kommunizieren.

Die Daten, welche die vor dem Fahrzeug liegende Fahrstrecke betreffen, werden auch als prädiktive Streckendaten bezeichnet, da sie insbesondere Informationen beinhalten können, welche vom Fahrer des Fahrzeugs optisch noch gar nicht erfasst werden können. Werden nun diese prädiktiven Streckendaten bei der Auswertung der Signale des Temperatursensors genutzt, so können ansonsten als Störgrößen betrachtete Änderungen der Außentemperatur als durch die Gegebenheiten der Fahrstrecke bedingt erkannt und somit nicht als Störgrößen, sondern als tatsächliche Änderungen der Außentemperatur berücksichtigt werden.

In einer vorteilhaften Ausgestaltung der Erfindung wird eine Glättung der Signale in Abhängigkeit von den die Fahrstrecke betreffenden Daten verändert. Die Glättung entscheidet nämlich darüber, inwieweit von einem auszugebenden Wert - beispielsweise einem Mittelwert - abweichende Messwerte bei der Wertebildung berücksichtigt werden. Bei der Bildung des auszugebenden Werts können mit dem Temperatursensor erfasste Messwerte insbesondere gewichtet berücksichtigt werden.

Eine besonders starke Glättung oder Dämpfung der Signale ergibt sich beispielsweise dann, wenn Messwerte zur Mittelwertbildung herangezogen werden, welche über ein besonders langes Zeitintervall hinweg gewonnen wurden. Dann spielen nämlich einzelne Ausreißer der Messwerte keine besondere Rolle. Wird hingegen lediglich aus innerhalb eines kurzen Zeitintervalls erfassten Messwerten ein Mittelwert gebildet, und kommt es innerhalb dieses kurzen Zeitintervalls zu einer abrupten und starken Änderung der Messwerte, so schlägt sich dies auch in der Mittelwertbildung nieder. Das Dämpfen oder Glätten der Signale kann insbesondere mittels geeigneter digitaler Filter erfolgen. Beispielsweise kann eine insbesondere in der Einheit Sekunde angebbare Dämpfungskonstante eines Filters verkürzt werden, um eine schwächere Glättung der Signale zu erreichen, oder verlängert werden, um die Signale stark zu dämpfen.

In einer weiteren vorteilhaften Ausgestaltung der Erfindung wird die Glättung der Signale abgeschwächt, wenn das Fahrzeug in einen Abschnitt der Fahrstrecke gelangt, bei welchem die Daten auf das Vorliegen einer gegenüber einem vorangegangenen Abschnitt der Fahrstrecke verringerten Außentemperatur schließen lassen. Erfasst nämlich dann der Temperatursensor in dem Abschnitt mit verringerter Außentemperatur einen vergleichsweise abrupten Temperaturabfall, so sorgt die geringe Glättung der Signale des Sensors dafür, dass auch der aus mittels des Temperatursensors erfassten Messwerten gebildete Ausgabewert, insbesondere Mittelwert, diese abrupte Temperaturänderung wiedergibt. So wird dafür gesorgt, dass durch Berücksichtigung der prädiktiven Streckendaten eine rasche Verringerung der Außentemperatur nicht als Störgröße aufgefasst und bei der Auswertung der Signale eliminiert, sondern vielmehr berücksichtigt wird.

Die Glättung der Signale kann insbesondere dann abgeschwächt werden, wenn das Fahrzeug an das Ende eines Tunnels gelangt. Gerade bei einem vergleichsweise langen Tunnel kann es nämlich vorkommen, dass diesseits und jenseits des Tunnels stark unterschiedliche Außentemperaturen vorliegen. Im Tunnel kann eine von der Lufttemperatur außerhalb des Tunnels weitgehend unabhängige Temperatur vorliegen, welche daher höher sein kann als die Lufttemperatur außerhalb des Tunnels. Dann kann es bei kalter Witterung am Ende des Tunnels zu einem abrupten Temperatursturz kommen. Dieser wird vorliegend durch eine entsprechend schwache Glättung der Signale des Temperatursensors auch als solcher erkannt. In analoger Weise wird ein überraschender Temperaturanstieg am Ende des Tunnels als solcher erkannt, und er kann entsprechend zeitnah dem Fahrer kommuniziert werden.

Zusätzlich oder alternativ kann die Glättung abgeschwächt werden, wenn das Fahrzeug an den Beginn einer Brücke oder den Beginn einer Schneise in einem bewaldeten Gebiet oder an den Beginn einer Geländesenke gelangt. Auch auf einer Brücke oder im Bereich einer Schneise können nämlich aufgrund der exponierten Lage lokal sehr stark von dem Streckenabschnitt vor der Brücke oder Schneise verschiedene Witterungsverhältnisse vorliegen. Insbesondere kann es bei niedrigen Außentemperaturen und entsprechendem Niederschlag oder bei hoher Luftfeuchte im Bereich der Brücke zur Eisbildung kommen. Eine ähnliche Situation kann sich aufgrund der exponierten Lage beim Durchfahren einer Schneise einstellen. Ein vergleichbares Phänomen kann bei einer Geländesenke vorkommen, in welcher sich ein so genannter Kaltluftsee befinden kann, welcher dann gegebenenfalls für plötzlich auftretende, ungünstige Straßenverhältnisse sorgt. Durch das auf solchen Fahrstrecken erfolgende schwächere Dämpfen oder Glätten der Signale kann ein möglicher Temperatursturz im Bereich der Brücke, Schneise oder Geländesenke besonders gut erfasst werden.

Als weiter vorteilhaft hat es sich gezeigt, wenn die Glättung der Signale verstärkt wird, wenn das Fahrzeug in einen Abschnitt der Fahrstrecke gelangt, bei welchem die Daten auf das Vorliegen einer gegenüber einem vorangegangenen Abschnitt der Fahrstrecke erhöhte Außentemperatur schließen lassen. Dann macht sich nämlich die tatsächlich ansteigende Außentemperatur nicht oder kaum bei der dem Fahrer kommunizierten Temperaturanzeige bemerkbar.

Insbesondere kann die Glättung der Signale verstärkt werden, wenn das Fahrzeug an den Beginn eines Tunnels gelangt und/oder während das Fahrzeug den Tunnel durchfährt. In einem Tunnel liegen nämlich häufig vergleichsweise einheitliche Temperaturen vor, welche weitgehend unabhängig sind von den außerhalb des Tunnels vorliegenden Lufttemperaturen. Ein Fahrer, welcher die im Tunnel ansteigende Außentemperatur verfolgt, kann dann besonders stark überrascht sein, wenn beim Verlasen des Tunnels plötzlich niedrigere Temperaturen vorliegen. Zeigt hingegen bereits während des Durchfahrens des Tunnels die Temperaturanzeige vergleichsweise niedrige Temperaturen an, wie sie vor dem Tunnel vorliegen, so ist ein eventueller Temperatursturz am Ausgang des Tunnels weniger drastisch und der Fahrer ist bereits in gewisser Weise für das Vorliegen niedriger Temperaturen sensibilisiert. Zudem kann der Temperatursturz am Ausgang des Tunnels rascher angezeigt werden, wenn während der Tunneldurchfahrt die Außentemperatur-Anzeige vergleichsweise konstant bleibt.

Bevorzugt werden die Daten, welche die vor dem Fahrzeug liegende Fahrstrecke betreffen, von einem Navigationssystem des Fahrzeugs zur Verfügung gestellt. Dann kann nämlich besonders gut berücksichtigt werden, wann das Fahrzeug in einen Abschnitt der Fahrstrecke gelangt, bei welchem mit einer abrupten Temperaturänderung zur rechnen ist.

Als weiter vorteilhaft hat sich gezeigt, wenn bei der Auswertung der Signale ein Temperaturwert berücksichtigt wird, welcher nicht mit einem Sensor des Fahrzeugs, sondern mit einem fahrzeugexternen Sensor gemessen ist. Dieser Temperaturwert wird also einer Steuerungseinrichtung des Fahrzeugs von außen übermittelt. So kann beispielsweise die Information berücksichtigt werden, dass jenseits eines Tunnels niedrige Außentemperaturen vorliegen. Dies ist insbesondere dann von Bedeutung, wenn die niedrige Außentemperatur im Bereich des Gefrierpunkts oder darunter liegt. Wird der die Daten zur Fahrstrecke und die Signale des Sensors verarbeitenden Steuerungseinrichtung - etwa über Funk - das Vorliegen eines solchen, nicht mit dem Temperatursensor des Fahrzeugs gemessenen Außentemperatur übermittelt, so kann die Auswertung der Signale des fahrzeugeigenen Temperatursensors von dem Vorliegen dieses Temperaturwerts abhängig gemacht werden.

Schließlich hat es sich als vorteilhaft gezeigt, wenn eine Warnung ausgegeben wird, sobald ein aufgrund der veränderten Auswertung der Signale gewonnener und die Außentemperatur angebender Datenwert geringer ist als ein vorbestimmter Schwellenwert. Dann braucht der Fahrer eine Temperaturanzeige nicht im Auge zu behalten, sondern wird besonders zuverlässig, insbesondere optisch und/oder akustisch, auf die geringe Außentemperatur hingewiesen. Bevorzugt ist hierbei der vorbestimmte Schwellenwert, welcher beispielsweise bei 4 °C liegen kann, so gewählt, dass bei dessen Unterschreiten bei entsprechender Witterung mit Eisbildung auf der Straße gerechnet werden kann.

Das erfindungsgemäße Fahrzeug umfasst eine Steuerungseinrichtung und zumindest einen Temperatursensor, dessen Signale der Steuerungseinrichtung übermittelbar sind. Die Steuerungseinrichtung ist zusätzlich zum Verarbeiten von Daten ausgelegt, welche eine vor dem Fahrzeug liegende Fahrstrecke betreffen und dazu, eine Auswertung der Signale in Abhängigkeit von den die Fahrstrecke betreffenden Daten zu verändern. Über die Steuerungseinrichtung kann dann eine Außentemperatur-Anzeige des Fahrzeugs angesteuert werden, auf welcher abrupte Änderungen der Außentemperatur darstellbar sind. Solche abrupten Änderungen der Außentemperatur werden hierbei nämlich aufgrund der Berücksichtigung der Daten zur Fahrstrecke nicht als Störgrößen gewertet.

Die für das erfindungsgemäße Verfahren beschriebenen Vorteile und bevorzugten Ausführungsformen gelten auch für das erfindungsgemäße Fahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: schematisiert eine Fahrstrecke eines Fahrzeugs durch einen Tunnel, wobei diesseits und jenseits des Tunnels unterschiedliche Außentemperaturverhältnisse vorliegen;
- Fig. 2: die auf einer Anzeige des Fahrzeugs angezeigten Außentemperaturwerte beim Befahren der Fahrstrecke, wenn keine prädiktiven Streckendaten berücksichtigt werden; und
- Fig. 3: die auf einer Anzeige des Fahrzeugs angezeigten Außentemperaturwerte beim Befahren der Fahrstrecke und bei einer Berücksichtigung prädiktiver Streckendaten.

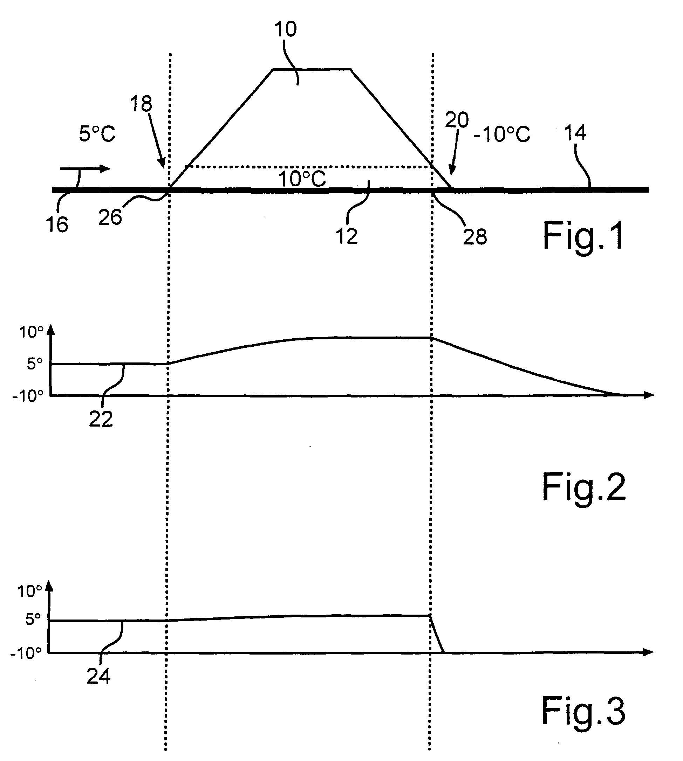

Fig. 1 zeigt schematisiert einen Berg 10 mit einem durch diesen hindurchführenden Tunnel 12. Eine Fahrt eines (nicht gezeigten) Kraftfahrzeugs auf einer durch den Tunnel 12 führenden Fahrstrecke 14 ist durch einen Bewegungspfeil 16 veranschaulicht. Diesseits des Berges 10 und somit bis zu einem Eingang 18 des Tunnels 12 liegt eine Außentemperatur von z. B. 5 °C vor. Im Tunnel 12 liegt die Außentemperatur aufgrund der Überdeckung des Tunnels 12 durch den Berg 10 höher, vorliegend beispielsweise bei 10 °C. An einem Ausgang 20 des Tunnels 12 liegt eine sehr niedrige Außentemperatur von im vorliegenden Beispiel -10 °C vor.

Ein Steuergerät des auf der Fahrstrecke 14 fahrenden Kraftfahrzeugs erhält Signale eines Temperatursensors des Kraftfahrzeugs und verarbeitet die Signale, um auf einer Anzeige die Außentemperatur darzustellen. Üblicherweise werden hierbei Störgrößen unterdrückt, damit nicht beispielsweise im Stand des Kraftfahrzeugs die von einem Motorblock zu dem Temperatursensor gelangende Wärme dazu führt, dass auf der Anzeige ein erhöhter Außentemperaturwert dargestellt wird. Zum Unterdrücken solcher Störgrößen werden digitale Filter verwendet, welche die Signale des Temperatursensors dämpfen oder glätten. Dies führt jedoch dazu, dass tatsächliche starke Temperaturschwankungen nicht von zu unterdrückenden Störgrößen unterschieden werden. Es kann daher selbst bei einem Temperatursturz, wie er im vorliegenden Beispiel am Ausgang 20 des Tunnels 12 vorliegt, zu einer langsamen Änderung der angezeigten Temperatur kommen, wenn nicht wie nachstehend beschrieben prädiktive Streckendaten berücksichtigt werden.

Fig. 2 veranschaulicht anhand einer Kurve 22, wie ohne die Berücksichtigung prädiktiver Streckendaten die auf der Anzeige dargestellte Temperatur während der Durchfahrt durch den Tunnel 12 langsam ansteigt und anschließend ab dem Erreichen des Ausgangs 20 des Tunnels 12 langsam wieder absinkt. Bei einer solchen, langsam reagierenden Außentemperatur-Anzeige dauert es nach dem Verlassen des Tunnels 12 mehrere Minuten, bis die angezeigte Außentemperatur dem tatsächlich vorliegenden Temperaturwert von im Beispiel -10 °C entspricht. Obwohl also mit dem Verlassen des Tunnels 12 die Gefahr von Eisbildung auf der Fahrstrecke 14 besteht, wird der Fahrer nicht entsprechend rasch davor gewarnt, dass eine Vereisungsgefahr besteht. Gegebenenfalls kann also der Fahrer nicht rasch genug auf die jenseits des Tunnels 12 vorliegenden Witterungsverhältnisse reagieren.

Vorliegend ist daher das Steuergerät des Kraftfahrzeugs dazu ausgelegt, prädiktive Streckendaten, also Daten, welche die vor dem Kraftfahrzeug liegende Fahrstrecke betreffen, zu berücksichtigen und in Abhängigkeit von den prädiktiven Streckendaten die Auswertung der Signale des Temperatursensors zu verändern.

Das Resultat ist in einer in Fig. 3 gezeigten Kurve 24 gezeigt. Ein Navigationssystem des Kraftwagens übermittelt dem Steuergerät die Information, dass an einem Punkt 26 der Fahrstrecke 14 der Tunnel 12 beginnt. Aufgrund dieser die Fahrstrecke 14 betreffenden Daten werden dann die Signale des Temperatursensors bei der Einfahrt in den Tunnels 12 entweder unterdrückt oder stärker gefiltert, so dass eine besonders starke Glättung der Signale stattfindet. Dies führt dazu, dass sowohl am Eingang 18 des Tunnels 12 als auch während das Kraftfahrzeug den Tunnel 12 durchfährt, die angezeigte Außentemperatur nicht oder allenfalls kaum ansteigt.

Das Navigationssystem übermittelt dem Steuergerät ebenso, dass in einem Punkt 28 der Fahrstrecke 14 der Tunnel 12 endet. Mit dem Erreichen des Ausgangs 20 des Tunnels 12 wird daraufhin die Glättung der Signale kurzzeitig stark abgeschwächt. Es erfolgt also kurzzeitig eine nur schwache Filterung bzw. schwache Dämpfung der Rohwerte des von dem Temperatursensor gelieferten Signals. Entsprechend zeigt die Außentemperatur-Anzeige unmittelbar beim Verlassen des Tunnels 12 die tatsächlich vorliegende, sehr niedrige Außentemperatur von dem Beispiel -10 °C an. Der Fahrer wird dann also sehr schnell gewarnt, dass diesseits des Tunnels 12 niedrige Außentemperaturen vorliegen, welche bei entsprechender Witterung mit dem Vorliegen von Eis auf der Fahrstrecke 14 einhergehen können. So kann der Fahrer rechtzeitig seine Geschwindigkeit an die gegebenenfalls vorliegenden Witterungs- und Straßenverhältnisse anpassen.

Das vorliegend am Beispiel eines Tunnels 12 veranschaulichte Berücksichtigen prädiktiver Streckendaten bei der Auswertung der Signale des Temperatursensors kann in analoger Weise beim Befahren einer Brücke, beim Erreichen einer Schneise oder bei der Einfahrt in eine Geländesenke, in welcher sich Kaltluft gesammelt hat, zur Anwendung kommen.

Zusätzlich können von dem Steuergerät auf anderem Wege als mit dem Temperatursensor des Fahrzeugs ermittelte Temperaturwerte berücksichtigt werden, beispielsweise Temperaturwerte, welche Gegenstand einer Wettervorhersage sind.

## Patentansprüche

1. Verfahren zum Betreiben einer Sensoreinrichtung in einem Fahrzeug, bei welchem Signale zumindest eines zum Erfassen einer Außentemperatur ausgelegten Sensors und Daten verarbeitet werden, welche eine vor dem Fahrzeug liegende Fahrstrecke (14) betreffen,
wobei eine Auswertung der Signale in Abhängigkeit von den die Fahrstrecke (14) betreffenden Daten verändert wird,
**dadurch gekennzeichnet, dass**
eine Glättung der Signale in Abhängigkeit von den die Fahrstrecke (14) betreffenden Daten verändert wird, wobei
die Glättung der Signale abgeschwächt wird, wenn das Fahrzeug in einen Abschnitt (20) der Fahrstrecke (14) gelangt, für welchen die Daten auf das Vorliegen einer gegenüber einem vorangegangenen Abschnitt (12) der Fahrstrecke (14) verringerten Außentemperatur schließen lassen und/oder
die Glättung der Signale verstärkt wird, wenn das Fahrzeug in einen Abschnitt (12) der Fahrstrecke (14) gelangt, für welchen die Daten auf das Vorliegen einer gegenüber einem vorangegangenen Abschnitt der Fahrstrecke (14) erhöhten Außentemperatur schließen lassen.

2. Verfahren nach Anspruch 1,
**dadurch gekennzeichnet, dass**
die Glättung der Signale abgeschwächt wird, wenn das Fahrzeug an das Ende (20) eines Tunnels (12) und/oder den Beginn einer Brücke und/oder einer Schneise und/oder einer Geländesenke gelangt.

3. Verfahren nach Anspruch 1 oder 2,
**dadurch gekennzeichnet, dass**
die Glättung der Signale verstärkt wird, wenn das Fahrzeug an den Beginn (18) eines Tunnels (12) gelangt und/oder während das Fahrzeug den Tunnel (12) durchfährt.

4. Verfahren nach einem der Ansprüche 1 bis 3,
**dadurch gekennzeichnet, dass**
die Daten, welche die vor dem Fahrzeug liegende Fahrstrecke (14) betreffen, von einem Navigationssystem des Fahrzeugs zur Verfügung gestellt werden.

5. Verfahren nach einem der Ansprüche 1 bis 4,
**dadurch gekennzeichnet, dass**
bei der Auswertung der Signale ein mit einem fahrzeugexternen Sensor gemessener Temperaturwert berücksichtigt wird.

6. Verfahren nach einem der Ansprüche 1 bis 5,
**dadurch gekennzeichnet, dass**
eine Warnung ausgeben wird, wenn ein aufgrund der veränderten Auswertung der Signale gewonnener und die Außentemperatur angebender Datenwert geringer ist als ein vorbestimmter Schwellenwert.

7. Fahrzeug mit einer Steuerungseinrichtung und mit zumindest einem Temperatursensor, dessen Signale der Steuerungseinrichtung übermittelbar sind, wobei die Steuerungseinrichtung zum Verarbeiten von Daten ausgelegt ist, welche eine vor dem Fahrzeug liegende Fahrstrecke (14) betreffen,
wobei die Steuerungseinrichtung dazu ausgelegt ist, eine Auswertung der Signale in Abhängigkeit von den die Fahrstrecke (14) betreffenden Daten zu verändern,
**dadurch gekennzeichnet, dass**
die Steuerungseinrichtung dazu ausgelegt ist, eine Glättung der Signale in Abhängigkeit von den die Fahrstrecke (14) betreffenden Daten zu verändern und hierbei
die Glättung der Signale abzuschwächen, wenn das Fahrzeug in einen Abschnitt (20) der Fahrstrecke (14) gelangt, für welchen die Daten auf das Vorliegen einer gegenüber einem vorangegangenen Abschnitt (12) der Fahrstrecke (14) verringerten Außentemperatur schließen lassen und/oder
die Glättung der Signale zu verstärken, wenn das Fahrzeug in einen Abschnitt (12) der Fahrstrecke (14) gelangt, für welchen die Daten auf das Vorliegen einer gegenüber einem vorangegangenen Abschnitt der Fahrstrecke (14) erhöhten Außentemperatur schließen lassen.

## Claims

1. Method of operating a sensor installation in a vehicle, in which signals from at least one sensor designed to detect an outside temperature and data that concern a route (14) lying before the vehicle are processed, in which a processing of the signals is changed according to the data that concern the route (14), **characterised in that** a smoothing of the signals is changed according to the data that concern the route (14), in which the smoothing of the signals is reduced when the vehicle enters a section (20) of the route (14) for which the data lead to the conclusion that the outside temperature is lower than on a previous section (12) of the route (14) and/or the smoothing of the signals is increased when the vehicle enters a section (12) of the route (14) for which the data lead to the conclusion that the outside temperature is higher than on a previous section of the route (14).

2. Method according claim 1, **characterised in that** the smoothing of the signal is reduced when the vehicle reaches the end (20) of a tunnel (12) and/or the beginning of a bridge and/or an aisle and/or a dip in the terrain.

3. Method according to claim 1 or 2, **characterised in that** the smoothing of the signals is increased when the vehicle reaches the beginning (18) of a tunnel (12) and/or while the vehicle is passing through the tunnel (12).

4. Method according to claims 1 to 3, **characterised in that** the data that concern a route (14) lying before the vehicle are provided by a navigation system of the vehicle.

5. Method according to claims 1 to 4, **characterised in that**, when processing the signals, a temperature value measured with a sensor external to the vehicle is taken into account.

6. Method according to claims 1 to 5, **characterised in that** a warning is output if a data value obtained on the basis of the changed processing of the signals and indicating the outside temperature is less than a predetermined threshold value.

7. Vehicle with a control installation and with at least one temperature sensor, the signals from which can be transmitted to the control installation, in which the control installation is designed for processing data that concern a route (14) lying before the vehicle, in which the control installation is designed to change a processing of the signals according to the data that concern the route (14), **characterised in that** the control installation is designed to change a smoothing of the signals according to the data that concern the route (14) whereby the smoothing of the signals is reduced when the vehicle enters a section (20) of the route (14) for which the data lead to the conclusion that the outside temperature is lower than on a previous section (12) of the route (14) and/or the smoothing of the signals is increased when the vehicle enters a section (12) of the route (14) for which the data lead to the conclusion that the outside temperature is higher than on a previous section of the route (14).

## Revendications

1. Procédé de fonctionnement d'un dispositif de détection dans un véhicule, dans lequel sont traités des signaux au moins d'un capteur conçu pour enregistrer une température externe et des données qui concernent un parcours (14) se trouvant devant le véhicule,
dans lequel une exploitation des signaux est modifiée en fonction des données concernant le parcours (14),
**caractérisé en ce que** :
un lissage des signaux est modifié en fonction des données concernant le parcours (14), dans lequel :
le lissage des signaux est affaibli lorsque le véhicule parvient à une section (20) du parcours (14) pour laquelle les données révèlent la présence d'une température externe réduite par rapport à une section précédente (12) du parcours (14) et/ou
le lissage des signaux est renforcé lorsque le véhicule parvient à une section (12) du parcourt (14) pour laquelle les données révèlent la présence d'une température externe plus élevée par rapport à une section précédente du parcours (14).

2. Procédé selon la revendication 1,
**caractérisé en ce que** :
le lissage des signaux est affaibli lorsque le véhicule parvient à la fin (20) d'un tunnel (12) et/ou au début d'un pont et/ou d'une trouée et/ou d'une dépression du terrain.

3. Procédé selon la revendication 1 ou la revendication 2,
**caractérisé en ce que** :
le lissage des signaux est renforcé lorsque le véhicule parvient au début (18) d'un tunnel (12) et/ou tandis que le véhicule traverse le tunnel (12).

4. Procédé selon l'une quelconque des revendications 1 à 3,
**caractérisé en ce que** :
les données qui concernent le parcours (14) se trouvant devant le véhicule sont présentées par un système de navigation du véhicule.

5. Procédé selon l'une quelconque des revendications 1 à 4,
**caractérisé en ce que**,
lors de l'exploitation des signaux, on tient compte d'une valeur de la température mesurée par un capteur extérieur au véhicule.

6. Procédé selon l'une quelconque des revendications 1 à 5,
**caractérisé en ce que** :
un avertissement est délivré lorsqu'une valeur de données obtenue en raison de l'exploitation modifiée des signaux et indiquant la température externe est plus faible qu'une valeur de seuil prédéterminée.

7. Véhicule comprenant un dispositif de commande et au moins un capteur de température, dont les signaux peuvent être transmis au dispositif de commande, dans lequel le dispositif de commande est conçu pour le traitement de données qui concernent un parcours (14) se trouvant devant le véhicule,
dans lequel le dispositif de commande est conçu de manière à modifier une exploitation des signaux en fonction des données concernant le parcours (14),
**caractérisé en ce que** :
le dispositif de commande est conçu de manière à modifier un lissage des signaux en fonction des données concernant le parcours (14) et, en l'occurrence,
affaiblir le lissage des signaux lorsque le véhicule parvient à une section (20) du parcours (14) pour laquelle les données révèlent la présence d'une température externe réduite par rapport à une section précédente (12) du parcours (14), et/ou
renforcer le lissage des signaux lorsque le véhicule parvient à une section (12) du parcours (14) pour laquelle les données révèlent la présence d'une température externe plus élevée par rapport à une section précédente du parcours (14).
